**Europäisches Patentamt**

**European Patent Office**

**Office européen des brevets**

(11) Veröffentlichungsnummer: **0 142 720**
A2

(12) # EUROPÄISCHE PATENTANMELDUNG

(21) Anmeldenummer: **84112614.7**

(22) Anmeldetag: **19.10.84**

(51) Int. Cl.⁴: **C 02 F 7/00**
**B 63 B 35/02, B 01 F 5/02**

(30) Priorität: **09.11.83 DE 3340420**

(43) Veröffentlichungstag der Anmeldung:
**29.05.85 Patentblatt 85/22**

(84) Benannte Vertragsstaaten:
**AT FR GB IT NL**

(71) Anmelder: **BLUM, Albert**
**Scheiderhöhe**
**D-5204 Lohmar 1(DE)**

(72) Erfinder: **BLUM, Albert**
**Scheiderhöhe**
**D-5204 Lohmar 1(DE)**

(74) Vertreter: **Lippert, Hans-Joachim, Dipl.-Ing. et al,**
**Dipl.-Ing. W. Dahlke, Dipl.-Ing. H.-J. Lippert**
**Patentanwälte Frankaforster Strasse 137**
**D-5060 Bergisch Gladbach 2(DE)**

(54) **Belüftungsvorrichtung für grössere Gewässer.**

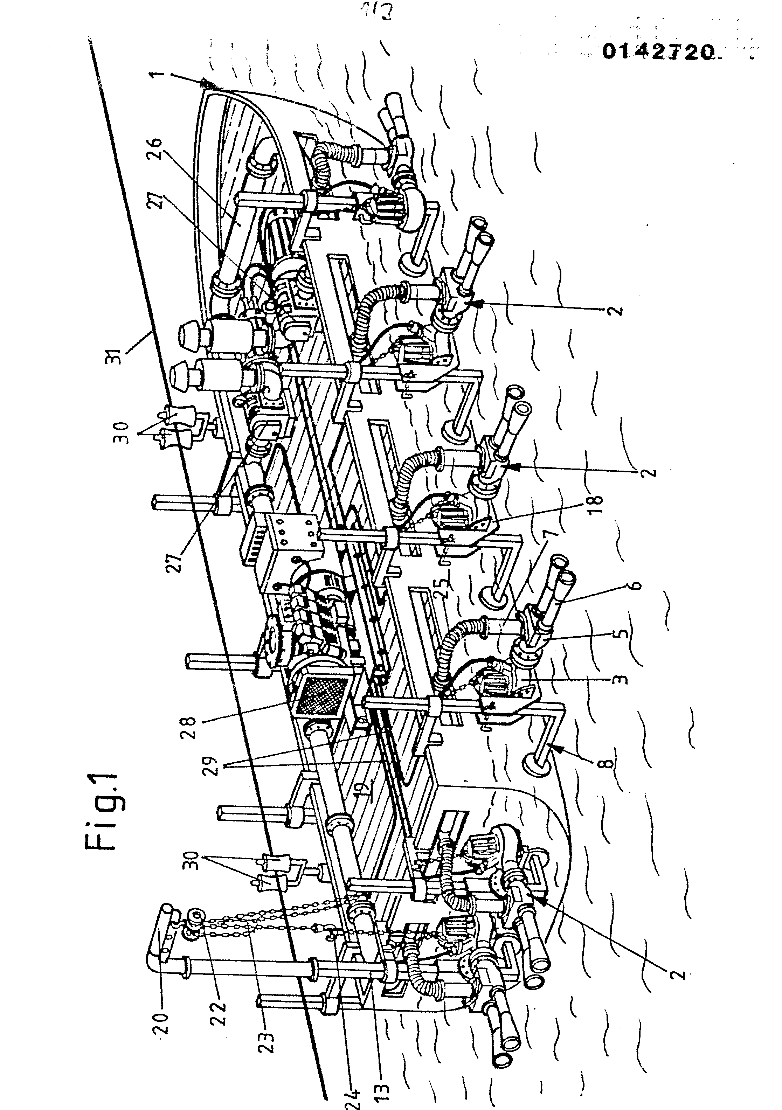

(57) Eine Belüftungsvorrichtung für Gewässer besteht aus einem Schwimmkörper sowie mindestens einer von diesem getragenen Belüftereinheit mit einer motorbetriebenen Pumpe, einer dieser nachgeschalteten Mischkammer, einer an die Mischkammer angeschlossenen Luftleitung sowie mindestens einem aus der Mischkammer herausführenden Ejektor. Um auch größere Gewässer, wie beispielsweise Meeresbuchten oder dergleichen, mit vertretbarem vorrichtungstechnischem Aufwand ausreichend belüften zu können, ist der Schwimmkörper, der die Belüftereinheit bzw. die Belüftereinheiten trägt, ein begehbarer Bootskörper (1). Die Belüftereinheiten (2) sind an der Außenwand (9) des Bootskörpers (1) befestigt. Mindestens eine der Belüftereinheiten ist als Tauchbelüfter ausgebildet und kann als Antrieb für den Bootskörper dienen (Figur 1).

Fig.1

Croydon Printing Company Ltd

EP 0 142 720 A2

0142720

Dipl.-Ing. W. Dahlke
Dipl.-Ing. H.-J. Lippert
Patentanwälte
Frankenforster Straße 137
5060 Bergisch Gladbach 1

Albert Blum
5204 Lohmar 1

18. Oktober 1984
L/Ma

"Belüftungsvorrichtung für größere
Gewässer"

Die Erfindung betrifft eine Belüftungsvorrichtung für größere Gewässer, bestehend aus einem Schwimmkörper sowie mindestens einer von diesem getragenen Belüftereinheit.

Zur Belüftung von Gewässern, die keinen tragfähigen ebenen Grund aufweisen, werden Tauchbelüfter mit Hilfe von Seilen an Schwimmkörpern befestigt. Bekannte Schwimmkörper, die zum Tragen von Tauchbelüftern verwendet werden, bestehen aus zu einem Quadrat oder Rechteck dicht zusammengeschweißten Stahlrohren mit großem Durchmesser, so daß eine ausreichend große Auftriebskraft zum Tragen des Tauchbelüfters erzielbar ist. Diese bekannten Belüftungsvorrichtungen können in Teichen oder Flüssen an besonders kritischen Stellen verankert werden.

Der Erfindung liegt die Aufgabe zugrunde, größere Gewässer, wie beispielsweise Meeresbuchten oder dergleichen, mit vertretbarem vorrichtungstechnischem Aufwand ausreichend zu belüften.

Erfindungsgemäß wird diese Aufgabe dadurch gelöst, daß der Schwimmkörper der Belüftungsvorrichtung ein begehbarer Bootskörper ist.

Durch die Erfindung ist es möglich, sehr große oder eine größere Anzahl kleinerer Belüftereinheiten an dem Boot zu befestigen. Die Belüftereinheiten können von dem Boot aus gewartet, repariert und ausgetauscht werden. Darüber hinaus ist es möglich, die gesamte Belüftungsvorrichtung mobil zu gestalten, so daß die Vorrichtung entweder entlang eines vorgeschriebenen Kurses fahren oder je nach Bedarf zu den kritischen Zonen gebracht werden kann.

Vorzugsweise ist an der Außenwand des Bootes eine Mehrzahl von Belüftereinheiten befestigt. Um dabei den vorhandenen Platz optimal auszunutzen, können die Belüftereinheiten rund um den Bootskörper angeordnet sein.

Mindestens einer der Belüftereinheiten sollte ein Tauchbelüfter mit einer motorbetriebenen Pumpe, einer dieser nachgeschalteten Mischkammer, einer an die Mischkammer angeschlossenen Luftleitung sowie einem einzigen, aus der Mischkammer herausführenden Ejektor oder mehreren in etwa dieselbe Richtung weisenden Ejektoren sein, so daß diese Belüftereinheit als Antrieb für den Bootskörper verwendet werden kann. Der Tauchbelüfter wirkt dabei wie ein Außenbordmotor.

Alternativ können selbstverständlich auch mehrere Belüftereinheiten zum Antrieb des Bootskörpers verwendet werden. Zum Vorwärts- und Rückwärtsfahren können jeweils am vorderen oder hinteren Ende vorgesehene Belüftereinheiten wahlweise in Betrieb gesetzt werden. Alternativ können aber auch die Ejektorrohre wahlweise verschwenkt werden.

Die Luftleitungen sämtlicher Belüftereinheiten sind zweckmäßig an eine gemeinsame Sammelleitung angeschlossen, die von mindestens einem zentralen Kompressor mit Druckluft beaufschlagbar ist.

Jede Belüftereinheit kann zum Antrieb der Pumpe einen Elektro-Tauchmotor aufweisen. Durch den Unterwasserbetrieb der Motoren wird eine gute Geräuschdämpfung und gleichzeitig eine gute Kühlung der Motoren erzielt.

Es ist auch möglich, daß mehrere oder alle Belüftereinheiten an eine gemeinsame zentrale Pumpe angeschlossen sind, wodurch der vorrichtungstechnische Aufwand unter Umständen reduziert werden könnte.

Vorzugsweise sind die Belüftereinheiten höhenverstellbar angeordnet. Dadurch ist es möglich, jeweils die optimale Höheneinstellung für den jeweiligen Anwendungsfall zu ermöglichen.

Beispielsweise kann es vorteilhaft sein, die Austrittsöffnungen von mindestens einigen der Ejektoren in Höhe der Wasseroberfläche zu positionieren, was durch den Anbau von Schwimmern selbsttätig erfolgen kann. Dadurch wird ein guter zusätzlicher Belüftungseffekt erreicht. Dieser Belüftungseffekt wird noch verbessert, wenn die Ejektoren als Breitstrahldüsen ausgebildet sind.

Ferner können die Austrittsöffnungen von mindestens einigen der Ejektoren auch schräg nach oben gerichtet sein und über der Wasseroberfläche liegen, so daß die Ejektoren als Freistrahldüsen wirken und das angesaugte Wasser versprühen und dadurch zusätzlich mit Luft anreichern.

Um eine gute Umwälzung des Wassers zu erreichen und auch tieferliegende Wasserschichten zu belüften, können die Pumpen der Belüftereinheiten an ihren Ansaugstutzen mit tief in das Wasser hinabreichenden Tauchrohren versehen sein.

Auf dem Bootskörper kann ein eigener, mit Brennstoff betreibbarer Stromerzeuger angeordnet sein, so daß die Vorrichtung unabhängig ist und dadurch einen weiten Aktionsradius hat.

Um die Belüftungsvorrichtung auch ohne Bedienungspersonal betreiben zu können, kann der Bootskörper über Leitrollen mit einem Führungskabel verbindbar sein. Der Antrieb des Bootskörpers ist dabei zweckmäßig umsteuerbar, so daß die Vorrichtung hin- und her gefahren werden kann.

Wenn die Belüftungsvorrichtung nur in einem relativ kleinen vorgeschriebenen Bereich verwendet werden soll, kann der Bootskörper über mindestens ein Haltekabel mit einer Verankerungsvorrichtung verbunden sein, die drehbar an einem stationären Pfosten sitzt. Die Belüftungsvorrichtung kann dann den Pfosten kontinuierlich umkreisen bzw. Schwenkbewegungen um diesen ausführen.

Der Pfosten kann eine Stromzuführung aufweisen, so daß ein auf dem Bootskörper vorgesehener zentraler Stromanschluß über ein Elektrokabel mit Strom versorgt werden kann. Die Stromabnahme am Pfosten kann beispielsweise über Gleitkontakte erfolgen.

Die Erfindung ist in der Zeichnung beispielsweise veranschaulicht und im nachstehenden im einzelnen anhand der Zeichnung beschrieben. Es zeigen:

Fig. 1      eine Ausführungsform einer Belüftungsvorrichtung,

Fig. 2      in vergrößerter Darstellung eine einzelne Belüftereinheit aus Fig. 1 und

Fig. 3      eine andere Ausführungsform der Belüftungsvorrichtung.

0142720

Nach Fig. 1 besteht die Belüftungsvorrichtung aus einem Bootskörper 1, an dessen Außenwand rundum mehrere Belüftereinheiten 2 befestigt sind. Die Belüftereinheiten 2 sind als Tauchbelüfter ausgebildet und bestehen aus einer Pumpe 3, einem diese antreibenden Tauchmotor 4, einer der Tauchpumpe 3 nachgeschalteten Mischkammer 5, zwei aus der Mischkammer 5 herausführenden Ejektoren 6 sowie einer in die Mischkammer 5 mündenden Luftleitung 7.

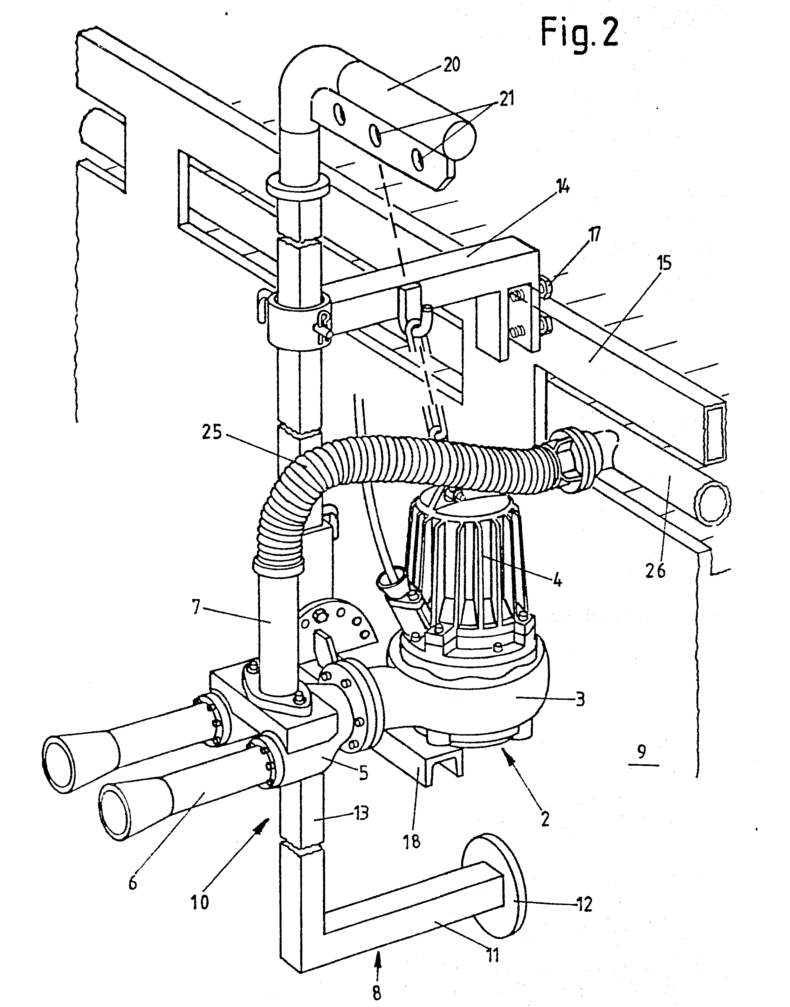

Wie insbesondere aus Fig. 2 hervorgeht, sitzt die Belüftereinheit 2 an einer Bügelkonstruktion 8, die lösbar an der Bordwand 9 befestigbar ist. Die Bügelkonstruktion umfaßt einen L-förmigen Bügel 10, dessen kurzer Schenkel gegen die Bordwand gerichtet ist und sich über einen Halteteller 12 an der Bordwand 9 abstützt. Der lange Schenkel 11 erstreckt sich etwa vertikal nach oben und ist in seinem oberen Bereich über einen höhenverstellbaren Querbügel an dem oberen Rand 15 der Bordwand befestigt. Der Querbügel 14 greift dabei mit einer Klaue 16 über den oberen Rand der Bordwand und ist dort mit Hilfe von Halteschrauben 17 gesichert.

An dem langen Schenkel 13 der Bügelkonstruktion 8 ist ein Podest 18 höhenverstellbar befestigt, welches zum Tragen der Belüftereinheit 2 dient. Das Podest kann je nach gewünschter Tauchtiefe der Ejektoren an dem Schenkel 11 der Bügelkonstruktion 8 verschoben werden. Das Podest 18 ist auch winkelverstellbar, so daß der jeweils gewünschte Neigungswinkel der Ejektoren 6 wahlweise eingestellt werden kann.

Der Bootskörper 1 kann beliebig groß sein. Wichtig ist, daß der gesamte obere Aufbau 19 begehbar ist, so daß sämtliche rund um den Bootskörper 1 angeordnete Belüftereinheiten 2 leicht zugänglich sind.

Wenn eine Belüftereinheit zu Wartungszwecken oder zum Austausch ausgebaut werden muß, so kann auf das obere Ende der Schenkel 13 der Bügelkonstruktion 8 ein Tragarm 20 aufgesteckt werden, der in verschiedenen Positionen Haltebohrungen 21 zum Einhängen eines Krans 22 mit Kette 23 und Lasthaken 24 aufweist.

Wartungs- und Reparaturarbeiten können dann bei ausgebauter Belüftereinheit 2 bequem an Bord vorgenommen werden.

Bei dem in Fig. 1 dargestellten Ausführungsbeispiel sind sämtliche Luftleitungen 7 der Belüftereinheiten 2 über flexible Verbindungsstücke 25 an eine gemeinsame Sammelleitung 26 angeschlossen, die sich rund um den gesamten Bootskörper erstreckt. Mit Hilfe von zwei im Vorderschiff angeordneten Kompressoren 27 wird die Sammelleitung mit Druckluft gespeist. Dadurch werden separate Einzelkompressoren für die Belüftereinheiten 2 entbehrlich.

Ferner ist auf dem Bootskörper 1 ein Dieselaggregat 28 zur eigenen Stromversorgung vorgesehen. Von dem Dieselaggregat 28 führen Elektrokabel 29 zu jedem einzelnen Tauchmotor 4 der Belüftereinheiten 2.

Der Bootskörper 1 mit seinen Belüftereinheiten 2 kann von einer Bedienungsperson völlig frei zu jeder beliebigen Stelle auf einem Gewässer gefahren werden, wo er eingesetzt werden soll. Als Antrieb dienen dabei die beiden hinteren Belüftereinheiten. Während der Fahrt können die seitlich gerichteten Belüftereinheiten in Betrieb bleiben und während der Fahrt ihre Belüftungsarbeit fortsetzen. Am Bug des Bootskörpers 1 sind zwei Belüftereinheiten vorgesehen, deren Ejektoren in Fahrtrichtung weisen. Diese Ejektoren müssen bei Vorwärtsfahrt selbstverständlich ausgeschaltet werden. Diese Ejektoren können bei Stillstand des Bootskörpers eingeschaltet sein, wenn sämtliche Belüftereinheiten im Betrieb sind, da sich dann die Rückstoßkräfte sämtlicher Ejektoren aufheben. Wenn die beiden hinteren Belüftereinheiten ausgeschaltet werden, können die beiden vorderen Belüftereinheiten zur Rückwärtsfahrt des Bootskörpers 1 verwendet werden.

Wenn die Vorrichtung zeitweise ohne Betriebspersonal betrieben werden soll, so kann der Bootskörper 1 über Leitrollen 30 an einem gespannten Kabel 31 geführt werden. Der Bootskörper kann dann beispielsweise in Vorwärtsfahrt bei ausgeschalteten vorderen Belüftereinheiten das Gewässer in einer Richtung durchqueren und dann nach automatischer Umstellung des Antriebs in Rückwärtsfahrt in entgegengesetzter Richtung.

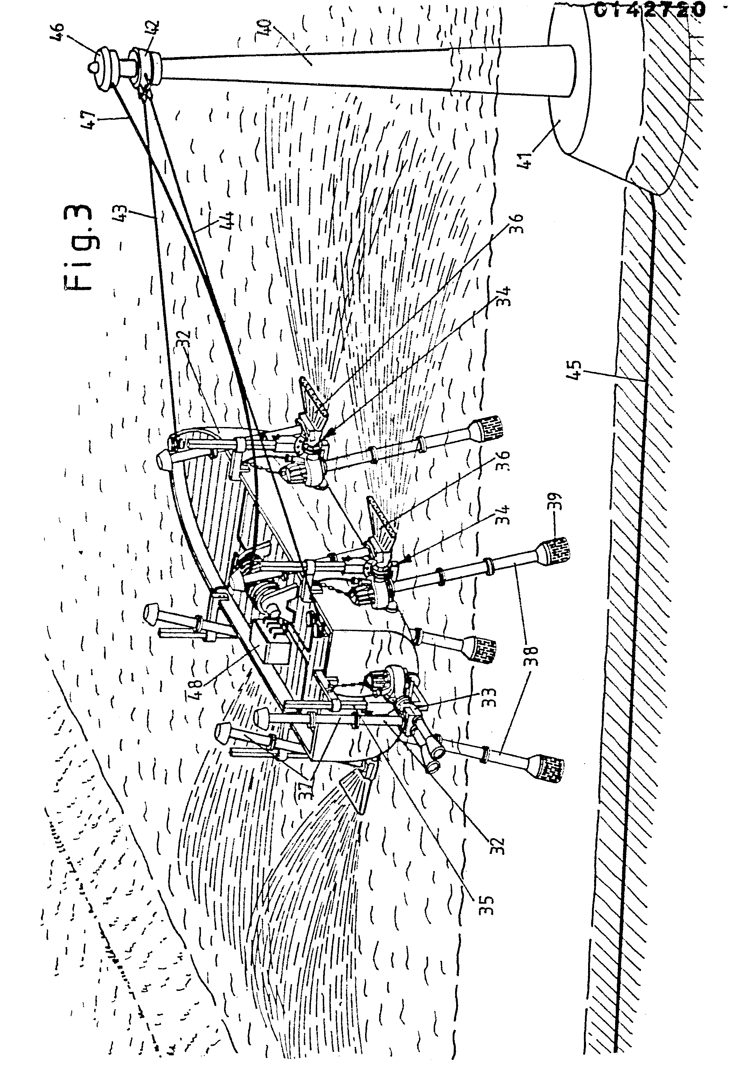

In Fig. 3 ist ein anderes Ausführungsbeispiel der Belüftungsvorrichtung dargestellt. Die Belüftungsvorrichtung besteht im vorliegenden Fall aus einem kleineren Bootskörper 32, an dessen Heck ein Tauchbelüfter 33 befestigt ist. Dieser Tauchbelüfter entspricht im wesentlichen den Belüftereinheiten 2 des ersten Ausführungsbeispiels, so daß dieser nicht noch einmal beschrieben zu werden braucht. Ferner sind an beiden Seiten des Bootskörpers 32 je zwei weitere Belüftereinheiten 34 vorgesehen. Die Belüftereinheiten sind mit Hilfe von Bügelkonstruktionen 35, die im wesentlichen den Bügelkonstruktionen 8 aus Fig. 1 entsprechen, an dem Bootskörper 32 befestigt.

Die zu beiden Seiten des Bootskörpers 32 angeordneten Belüftereinheiten 34 weisen anstelle von Unterwasser-Ejektoren je eine breite Freistrahldüse 36 auf. Durch Schrägstellung der Belüftereinheiten 34 ragen die Freistrahldüsen 36 schräg aus dem Wasser heraus, so daß das angesaugte Wasser frei über die Wasseroberfläche versprüht werden kann. Durch das Versprühen wird ein zusätzlicher Belüftungseffekt erzielt.

Die Luftleitungen 37 der Belüftereinheiten 33 und 34 sind bei diesem Ausführungsbeispiel·nicht mit Druckluft beaufschlagt, sondern führen frei nach oben, wobei durch den Pumpenbetrieb selbsttätig Luft angesaugt wird.

An die Ansaugstutzen der Belüftereinheiten 34 sind Tauchrohre 38 angeflanscht, die tief in das zu belüftende Wasser hineinreichen, so daß gleichzeitig ein Umwälzeffekt erzielt und auch tieferliegende Wasserschichten belüftet werden können. Die Eintrittsenden der Tauchrohre 38 sind mit Ansaugkörben 39 versehen, so daß keine größeren Gegenstände angesaugt werden können.

Bei dem in Fig. 3 dargestellten Ausführungsbeispiel dient die Belüftereinheit zur Belüftung eines lokal begrenzten Bereiches. Der Bootskörper ist dabei an einem zentralen Pfosten 40 verankert, der stationär in einem Betonfundament 41 gehaltert ist.Der Pfosten weist in einem Abstand von seinem oberen Ende eine drehbar gelagerte Verankerungseinrichtung 42 auf, an der der Bootskörper 32 über zwei Haltekabel 43 und 44 befestigt ist. Das eine Haltekabel 43 ist am Bug des Bootskörpers und das andere Haltekabel 44 am Heck befestigt. Bei Betätigung des Tauchbelüfters 33 läuft

0142720

der Bootskörper selbsttätig rund um den Pfosten 40 herum.

Zu dem Pfosten 40 führt ein Elektro-Erdkabel 45, das mit in der Pfostenspitze vorgesehenen Stromanschlüssen verbunden ist. Oben auf dem Pfosten sitzt eine drehbare Schleifkontakteinheit 46, von der aus ein Elektrokabel 47 zu einem Anschlußkasten 48 auf dem Bootskörper 32 führt. Von dem Anschlußkasten 48 aus führen Einzelleitungen zu den Motoren der einzelnen Belüfter 33 und 34.

Der Fahrtradius des Bootskörpers 32 kann durch mehr oder weniger weites Ausfahren der Haltekabel 43 und 44 sowie des Elektrokabels 47 eingestellt werden.

Wie aus den oben beschriebenen Ausführungsbeispielen zu erkennen ist, ist die erfindungsgemäße Belüftungsvorrichtung sehr variabel und vielseitig anwendbar. Es können alle Vorteile eines Bootsbetriebs ausgenutzt werden und die Belüfter können optimal betrieben und leicht gewartet werden.

**0142720**

Dipl.-Ing. W. Dahlke
Dipl.-Ing. H.-J. Lippert
Patentanwälte
Frankenforster Straße 137
5060 Bergisch. Gladbach 1

Albert Blum
5204 Lohmar 1

18. Oktober 1984
L/Ma

A n s p r ü c h e

1. Belüftungsvorrichtung für größere Gewässer, bestehend aus einem Schwimmkörper sowie mindestens einer von diesem getragenen Belüftereinheit, d a - d u r c h   g e k e n n z e i c h n e t, daß der Schwimmkörper ein begehbarer Bootskörper (1; 32) ist.

2. Belüftungsvorrichtung nach Anspruch 1, d a d u r c h   g e k e n n z e i c h n e t, daß an der Außenwand (9) des Bootskörpers (1; 32) eine Mehrzahl von Belüftereinheiten (2; 33, 34) befestigt ist.

3. Belüftungsvorrichtung nach Anspruch 2, d a - d u r c h   g e k e n n z e i c h n e t, daß die Belüftereinheiten (2; 33, 34) rund um den Bootskörper (1; 32) angeordnet sind.

4. Belüftungsvorrichtung nach einem der Ansprüche 1 bis 3, d a d u r c h   g e k e n n z e i c h - n e t, daß mindestens eine der Belüftereinheiten ein Tauchbelüfter (2; 33) mit einer motorbetriebenen Pumpe, einer dieser nachgeschalteten Mischkammer, einer an die Mischkammer angeschlossenen Luftleitung sowie einem einzigen, aus der Mischkammer herausführenden Ejektor oder mehreren in
etwa dieselbe Richtung weisenden Ejektoren (6)
ist und daß die Belüftereinheit als Antrieb für
den Bootskörper (1; 32) vorgesehen ist.

5. Belüftungsvorrichtung nach einem der Ansprüche
1 bis 4, d a d u r c h   g e k e n n z e i c h -
n e t, daß die Luftleitungen (7) sämtlicher Belüftereinheiten (2) an eine gemeinsame Sammelleitung (26) angeschlossen sind und daß die Sammelleitung (26) von mindestens einem zentralen Kompressor (27) mit Druckluft beaufschlagbar ist.

6. Belüftungsvorrichtung nach einem der Ansprüche
1 bis 5, d a d u r c h   g e k e n n z e i c h -
n e t, daß jede Belüftereinheit (2; 33, 34) zum
Antrieb der Pumpe (3) einen Elektro-Tauchmotor (4)
aufweist.

7. Belüftungsvorrichtung nach einem der Ansprüche
1 bis 6, d a d u r c h   g e k e n n z e i c h -
n e t, daß mehrere oder alle Belüftereinheiten
(2; 33, 34) an eine gemeinsame zentrale Pumpe
angeschlossen sind.

8. Belüftungsvorrichtung nach einem der Ansprüche
1 bis 7, d a d u r c h   g e k e n n z e i c h -
n e t, daß die Belüftereinheiten (2; 33, 34) höhenverstellbar angeordnet sind.

9. Belüftungsvorrichtung nach einem der Ansprüche
1 bis 8, d a d u r c h   g e k e n n z e i c h -
n e t, daß die Ejektoren als Breitstrahldüsen (36)
ausgebildet sind.

10. Belüftungsvorrichtung nach einem der Ansprüche 1 bis 9, d a d u r c h   g e k e n n z e i c h - n e t, daß die Austrittsöffnungen von mindestens einigen der Ejektoren in Höhe der Wasseroberfläche liegen.

11. Belüftungsvorrichtung nach einem der Ansprüche 1 bis 9, d a d u r c h   g e k e n n z e i c h - n e t, daß die Austrittsöffnungen von mindestens einigen der Ejektoren (36) schräg nach oben gerichtet sind und über der Wasseroberfläche liegen.

12. Belüftungsvorrichtung nach einem der Ansprüche 1 bis 11, d a d u r c h   g e k e n n - z e i c h n e t, daß die Pumpen (3) der Belüfter- einheiten (34) an ihren Ansaugstutzen tief in das Wasser hinabreichende Tauchrohre (38) aufweisen.

13. Belüftungsvorrichtung nach einem der Ansprüche 6 bis 12, d a d u r c h   g e k e n n - z e i c h n e t, daß auf dem Bootskörper (2) ein mit Brennstoff betreibbarer Stromerzeuger (28) angeordnet ist.

14. Belüftungsvorrichtung nach Anspruch 13, d a - d u r c h   g e k e n n z e i c h n e t, daß der Bootskörper (1) über Leitrollen (30) mit einem Führungskabel (31) verbindbar ist und daß der Antrieb des Bootskörpers (1) automatisch umsteuerbar ist.

15. Belüftungsvorrichtung nach einem der Ansprüche 4 bis 12, d a d u r c h   g e k e n n z e i c h - n e t, daß der Bootskörper (32) über mindestens ein Haltekabel (43, 44) mit einer Verankerungseinrichtung (42) verbunden ist, die drehbar an einem stationären Pfosten (40) sitzt.

16. Belüftungsvorrichtung nach Anspruch 15, d a - d u r c h   g e k e n n z e i c h n e t, daß der Pfosten (40) eine Stromzuführung (45) aufweist und daß ein auf dem Bootskörper (32) vorgesehener zentraler Stromanschluß (48) über ein Elektrokabel (47) mit der Stromzuführung des Pfostens (40) verbunden ist.

Fig.1

0142720

Albert Blum, Lohmar

Fig. 2

0142720

Albert Blum, Lohmar

Albert Blum, Lohmar

**Fig.3**